# EUROPEAN PATENT SPECIFICATION

(11) **EP 4 353 980 B1**
(45) Date of publication and mention of the grant of the patent: **30.07.2025**
(21) Application number: 22828611.8
(22) Date of filing: 13.05.2022
(51) Int. Cl.: F16B 37/04, H01M 50/20

(54) **INSERT NUT INSERTION STRUCTURE**
EINSATZMUTTER-EINFÜHRUNGSSTRUKTUR
STRUCTURE D'INSERTION D'ÉCROU D'INSERT

(30) Priority: 22.06.2021 KR 20210081117
(43) Date of publication of application: 17.04.2024
(73) Proprietor: LG Energy Solution, Ltd., Seoul 07335 (KR)
(72) Inventor: AN, Ji-Myong, Daejeon 34122 (KR); JEON, Byeong-Jun, Daejeon 34122 (KR)
(74) Representative: Goddar, Heinz J.
(86) International application number: PCT/KR2022/006909
(87) International publication number: WO 2022/270762

(56) References cited:
- EP-A1- 1 116 890
- WO-A1-2008/157265
- JP-A- 2010 169 164
- JP-U- H0 669 426
- KR-B1- 100 215 558
- KR-B1- 100 808 926
- US-A- 2 433 607
- US-A- 4 790 701
- US-A- 5 947 518
- US-A- 6 146 071
- US-A1- 2008 310 931
- US-A1- 2009 053 588

## Description

### TECHNICAL FIELD

The present disclosure relates to an insert nut insertion structure for preventing deformation or damage of an injection molded structure by minimizing stress that may be applied to the injection molded structure when inserting an insert nut.

The present application claims the benefit of Korean Patent Application No. 10-2021-0081117 filed on June 22, 2021 with the Korean Intellectual Property Office.

### BACKGROUND ART

Bolts and nuts are widely used to assemble two or more parts or structures. Keeping up with the recent trend towards reduced thickness of products, bolts or nuts are pre-installed in injection molded structures. For example, a body and a cover of a battery pack are made by forming a case that is divided into two and assembling the two cases, and to easily assemble the cases, an insert nut may be press fit or pre-installed by insert molding.

Forming the injection molded part and the insert nut together by insert injection molding is advantageous in terms of assembly performance and durability, but when considering the factors such as the assembly structure of the product, the number of insert nuts required for the product and the manufacturing cost, it is better to form the injection molded part and press fitting the insert nut.

However, the press fitting of the insert nut into the injection molded structure has a high likelihood of deformation or damage of the injection molded structure when press fitting the insert nut.

US 2 433 607 A relates to the installation of screw threaded fastening means in which a nut is retained in secured relation to a body of relatively soft material by means of a basket member penetratively engaging the softer body.

WO 2008/157265 A1 relates to fastener receivers such as nut plates, and fasteners, for example clip nut fasteners, nut cages and similar assemblies.

EP 1 116 890 A1 relates to caged female threaded fasteners which provide high torsional strength while allowing removal of the fasteners for servicing.

US 6 146 071 A relates to a caged nut and retainer assembly for mounting a vehicle component, such as an engine cradle, to the frame or rail of a vehicle.

US 2008/310931 A1 relates to clip nut fasteners, nut cages and similar assemblies.

US 5 947 518 A relates to methods and apparatus for connecting a vehicle's rear suspension to the vehicle's body.

US 4 790 701 A1 relates to a retainer assembly for at least one fastener, for example, a nut or a bolt, in which the fastener is floatingly retained or captivated within a channel member.

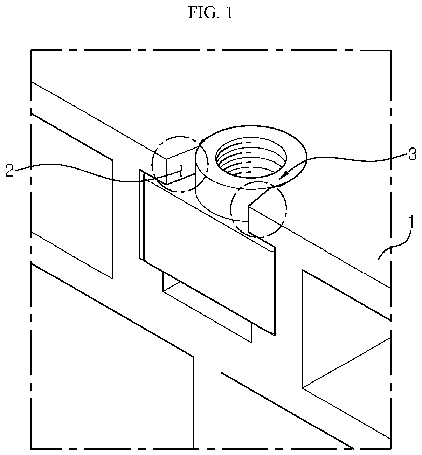

For example, as shown in FIG. 1, to insert the insert nut 3 into a nut fixing groove 2 of the injection molded structure 1, it is necessary to forcibly stretch the dashed line section of FIG. 1 wide apart to place parts of the insert nut in the nut fixing groove 2, then completely push the insert nut 3 into the nut fixing groove 2 by hitting with a hammer (not shown). In this process, stress is applied to a region where the insert nut is inserted, and the corresponding region is vulnerable to deformation or damage. In this case, when a bolt is screwed into the insert nut, deformation and damage of the injection molded structure becomes worse by the fastening force between the bolt and nut, resulting in degradation of the durability of the product. Additionally, the damage of the region where the insert nut is inserted is seemingly invisible, so even though the product is determined to be faulty in the durability test, in many cases, it is difficult to find the cause.

### DISCLOSURE

### Technical Problem

The present disclosure is designed to solve the above-described problem, and therefore the present disclosure is directed to providing an insert nut insertion structure for preventing deformation or damage of an injection molded structure by minimizing stress that may be applied to the injection molded structure when inserting an insert nut.

The present disclosure is further directed to providing an insert nut and an insert nut insertion structure for easily inserting the insert nut into an injection molded structure by hand without using a tool such as a hammer.

These and other objectives and advantages of the present disclosure can be understood by the following description, and will be apparent from the embodiments of the present disclosure. In addition, it will be readily appreciated that the objectives and advantages of the present disclosure can be realized by the means set forth in the appended claims and a combination thereof.

### Technical Solution

To achieve the above-described objective, an insert nut insertion structure of the present invention includes an insert nut including a bolt fastening portion having threads on an inner circumference into which a bolt is screwed; and a flange portion provided on an outer circumference of the bolt fastening portion and extended in a circumferential direction of the bolt fastening portion; and a nut fixing groove into which the insert nut is inserted in a first direction perpendicular to a direction in which the bolt is screwed, wherein the nut fixing groove includes a flange receiving portion having an internal space conforming to a shape of the flange portion; and a pair of fingers provided on the flange portion positioned in the flange receiving portion and formed in a cantilever shape that surrounds, in part, a periphery of the bolt fastening portion.

The flange receiving portion includes a base plate on which the flange portion is seated; two side plates which are vertically extended from the base plate and contact two sides of the flange portion; and cover plates which are horizontally extended from the two side plates, contact an upper surface of the flange portion and are spaced a predetermined distance apart from the pair of fingers.

The flange portion may be provided in contact with the cover plates and in non-contact with the pair of fingers.

The flange portion includes a lower flange portion and an upper flange portion formed in double layer along a lengthwise direction of the bolt fastening portion, the upper flange portion may be positioned in a space between the pair of fingers and the cover plates, and the lower flange portion may be positioned in a space between the cover plates and the base plate.

The lower flange portion may be provided in contact with the cover plates.

The upper flange portion may be provided in non-contact with the pair of fingers.

The bolt fastening portion may have a cylindrical shape, and the pair of fingers may be extended side by side in a contrary direction to the first direction with their facing inner surfaces being a curved surface conforming to the outer circumference of the bolt fastening portion.

The pair of fingers may be made of an elastic material to allow the fingers to return to an original state when a force exerted to stretch the fingers wide apart is removed.

A top periphery of the bolt fastening portion may be interference fit in between the pair of fingers in the first direction.

According to another aspect of the present disclosure, there is provided a battery pack case including the insert nut insertion structure.

### Advantageous Effects

According to the present disclosure, it is possible to prevent deformation or damage of the injection molded structure by minimizing stress that may be applied to the injection molded structure when inserting the insert nut.

Additionally, according to the present disclosure, it is possible to easily insert the insert nut into the injection molded structure by hand without using a tool such as a hammer.

The effect of the present disclosure is not limited to the above-described effects, and these and other effects will be clearly understood by those skilled in the art from the present disclosure and the accompanying drawings.

### DESCRIPTION OF DRAWINGS

FIG. 1 is a diagram showing a conventional insert nut insertion structure.
FIG. 2 is a perspective view of an insert nut according to an embodiment not in accordance with the invention.
FIG. 3 is a perspective view showing an insert nut and a nut fixing groove according to an embodiment of the present disclosure which is not in accordance with the invention but included for illustrative purposes.
FIG. 4 is a perspective view showing an assembly structure of the insert nut and the nut fixing groove of FIG. 3 which is not in accordance with the invention.
FIG. 5 is a diagram showing an insert nut insertion structure and another structure fastened using a bolt according to an embodiment of the present disclosure which is not in accordance with the invention.
FIG. 6 is a schematic cross-sectional view of FIG. 5.
FIG. 7 is a perspective view of an insert nut according to an embodiment of the invention.
FIG. 8 is a perspective view showing an insert nut and a nut fixing groove according to another embodiment of the invention.
FIG. 9 is a perspective view showing an assembly structure of the insert nut and the nut fixing groove of FIG. 8.
FIG. 10 is a diagram showing an insert nut insertion structure and another structure fastened using a bolt according to another embodiment of the present invention.
FIG. 11 is a schematic cross-sectional view of FIG. 10.

### BEST MODE

Hereinafter, the exemplary embodiments of the present disclosure will be described in detail with reference to the accompanying drawings. Prior to the description, it should be understood that the terms or words used in the specification should not be construed as being limited to general and dictionary meanings, but rather interpreted based on the meanings and concepts corresponding to the technical aspects of the present disclosure on the basis of the principle that the inventor is allowed to define the terms appropriately for the best explanation. Therefore, the embodiments described herein and the illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

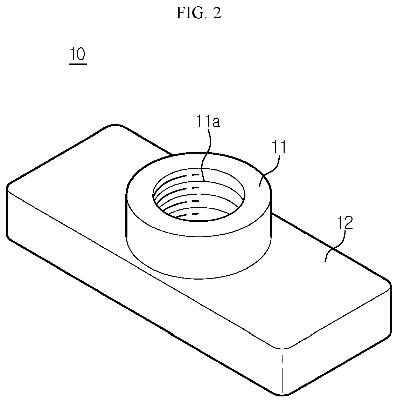

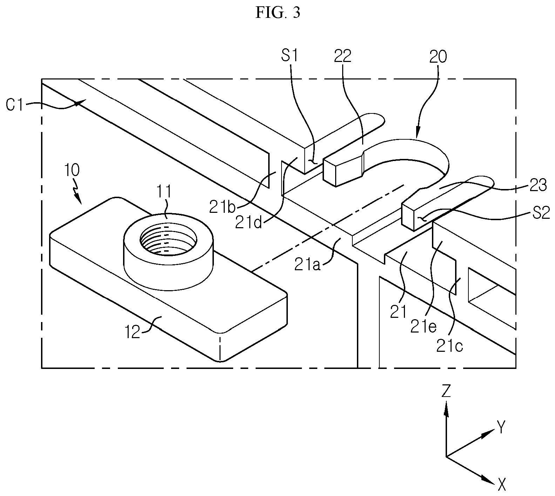

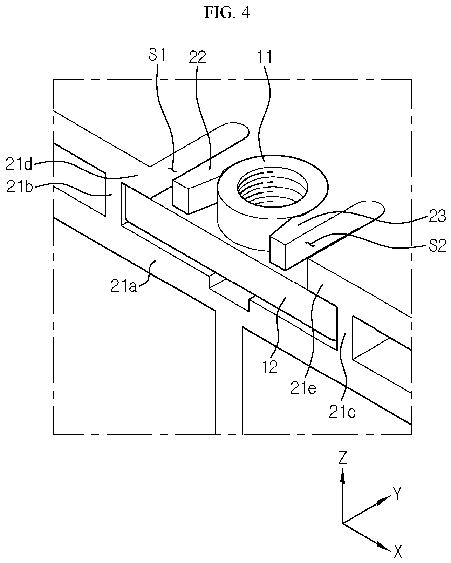

FIG. 2 is a perspective view of an insert nut according to an embodiment of the present disclosure, FIG. 3 is a perspective view showing the insert nut and a nut fixing groove according to an embodiment of the present disclosure which is not in accordance with the invention, and FIG. 4 is a perspective view showing an assembly structure of the insert nut and the nut fixing groove of FIG. 3.

As shown in these drawings, an insert nut insertion structure according to an embodiment of the present disclosure includes the insert nut 10 and the nut fixing groove 20.

The insert nut 10 includes a bolt fastening portion 11 having threads 11a on the inner circumference into which a bolt 30 is screwed, and a flange portion 12 provided on the outer circumference of the bolt fastening portion 11 and extended in the circumferential direction of the bolt fastening portion 11. Additionally, the nut fixing groove 20 may include a flange receiving portion 21 and a pair of fingers 22, 23, and may be configured to allow the insert nut 10 to be inserted in a first direction (Y axis direction) perpendicular to the direction in which the bolt 30 is screwed.

As described in detail below, the present disclosure is configured to easily stretch the pair of fingers 22, 23 wide apart with a small force, the fingers which play a role in holding the insert nut 10 when the insert nut 10 is inserted into the nut fixing groove 20, making it easy to insert the insert nut 10, and to apply a fastening force exerted by the bolt 30 to cover plates 21d, 21e of the flange receiving portion 21 rather than the pair of fingers 22, 23 when the bolt 30 is screwed, thereby reducing or eliminating deformation and damage risks of a case structure.

Hereinafter, the insert nut insertion structure of the present disclosure will be described in detail.

As shown in FIG. 2, the bolt fastening portion 11 of the insert nut 10 according to an embodiment of the present disclosure may have a cylindrical shape having threads on the inner circumference, and the flange portion 12 may have a rectangular plate shape and may be disposed on the bottom of the bolt fastening portion 11. Additionally, the insert nut 10 may include the cylindrical bolt fastening portion 11 protruding to a predetermined height in the Z axis direction from the center of the rectangular plate-shaped flange portion 12. In particular, in this embodiment, the flange portion 12 has the horizontal length extended longer than the vertical length to cause the fastening force of the bolt 30 to act on the cover plates 21d, 21e of the flange receiving portion 21 as described below when the bolt 30 is screwed into the insert nut 10 afterwards.

As shown in FIG. 3, which is not in accordance with the invention, the flange receiving portion 21 of the nut fixing groove 20 according to an embodiment of the present disclosure may have an internal space that conforms to the shape of the flange portion 12 to allow the insert nut 10 to be inserted, and as shown in FIG. 4, the pair of fingers 22, 23 may include the first finger 22 and the second finger 23 that are disposed on the flange portion 12, and each having a cantilever shape surrounding, in part, the periphery of the bolt fastening portion 11, when the flange portion 12 is placed in the flange receiving portion 21.

The first finger 22 and the second finger 23 may be integrally formed with the upper plate of the case structure C1, and each extended side by side in a contrary direction (-Y axis direction) to the first direction (+Y axis direction), spaced such a distance apart from each other as to allow the bolt fastening portion 11 to be inserted, with their facing inner surfaces being a curved surface conforming to the outer circumference of the bolt fastening portion 11 to bring them into close contact with the outer circumference of the bolt fastening portion 11.

Additionally, the pair of fingers 22, 23 may be in a cantilever shape at predetermined distances S1,S2 away from the cover plates 21d, 21e and made of an elastic material so the first finger 22 and the second finger 23 can return to the original state after the force exerted to stretch wide apart is removed. Here, the elastic material includes plastics that can return to the original state after it is a bit deformed with a small force. The pair of fingers 22, 23 of this embodiment are integrally formed with the case structure C1 formed by plastic injection molding, but they are invulnerable to damage caused by the small force that is exerted to stretch the fingers 22, 23 wide open, then removed. Alternatively, the pair of fingers 22, 23 may be made of a metal to eliminate the damage risk of the pair of fingers 22, 23. For example, the pair of fingers 22, 23 may be manufactured using a metal and assembled into the case structure C1.

Since the first finger 22 and the second finger 23 having the cantilever structure are easy to stretch wide apart, it is possible to insert the bolt fastening portion 11 in between the first finger 22 and the second finger 23 very easily when inserting the insert nut 10 into the nut fixing groove 20. For example, the first finger 22 and the second finger 23 may be spontaneously stretched wide apart by the bolt fastening portion 11 when the flange portion 12 is pushed into the flange receiving portion 21 in the first direction without needing to stretch the first finger 22 and the second finger 23 wide apart by hand, and in this condition, when the flange portion 12 is completely pushed into the flange receiving portion 21, the first finger 22 and the second finger 23 may return to the original state and the top periphery of the bolt fastening portion 11 may be interference fitted in between the pair of fingers 22, 23.

Accordingly, the flange portion 12 of the insert nut 10 is disposed in the internal space of the flange receiving portion 21, and the upper part of the bolt fastening portion 11 is constrained between the first finger 22 and the second finger 23, thereby preventing the bolt fastening portion 11 from sliding away in the contrary direction (-Y axis direction) to the insertion direction.

Referring back to FIGS. 3 and 4, which are not in accordance with the invention, the flange receiving portion 21 of the nut fixing groove 20 according to this embodiment may include a base plate 21a on which the flange portion 12 is seated, two side plates 21b, 21c which are vertically extended from the base plate 21a and come into contact with the two sides of the flange portion 12, and the cover plates 21d, 21e which are horizontally (±X axis direction) extended from the two side plates 21b, 21c, come into contact with the upper surface of the flange portion 12 and are spaced a predetermined distance apart from the pair of fingers 22, 23.

As shown in FIG. 4, which is not in accordance with the invention, when the insert nut 10 of this embodiment is inserted into the nut fixing groove 20, the left side of the flange portion 12 contacts the left side plate 21b of the flange receiving portion 21, and the right side of the flange portion 12 contacts the right side plate 21c of the flange receiving portion 21. Accordingly, the insert nut 10 may be restrained from rotating when the bolt 30 is screwed afterwards.

Additionally, the upper surfaces of the horizontal (±X axis direction) edges of the flange portion 12 are covered with the left cover plate 21d and the right cover plate 21e of the flange receiving portion 21. Accordingly, when the bolt 30 is screwed afterwards, the fastening force of the bolt 30 and the insert nut 10 is applied to the left cover plate 21d and the right cover plate 21e.

In particular, the flange portion 12 is in contact with the cover plates 21d, 21e and in non-contact with the pair of fingers 22, 23 when the bolt 30 is screwed. To this end, the cover plates 21d, 21e are thicker than the first finger 22 and the second finger 23. Additionally, the base of the pair of fingers 22, 23 is disposed at a higher position than the base of the cover plates 21d, 21e.

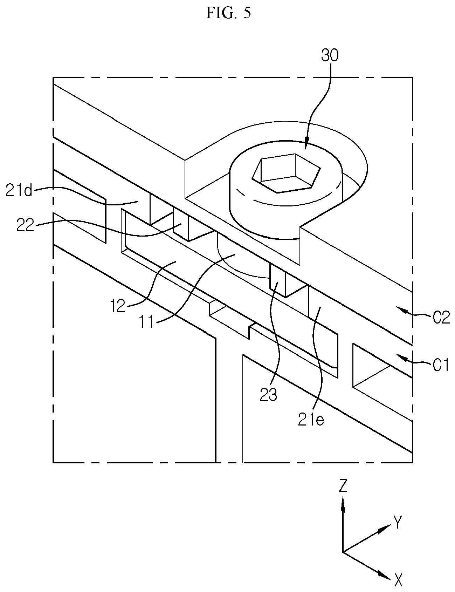

As shown in FIG. 5, which is not in accordance with the invention, the case structure C1 having the insert nut insertion structure and another structure C2 may be assembled by the fastening of the bolt 30 and the insert nut 10.

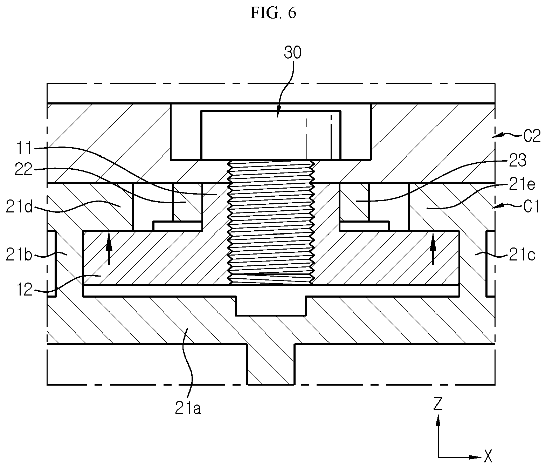

In this instance, as shown in FIG. 6, which is not in accordance with the invention, due to the structure in which the left side and the right side of the flange portion 12 of the insert nut 10 contact the left side plate 21b and the right side plate 21c of the flange receiving portion 21, the insert nut 10 is held in place when the bolt 30 screws into the insert nut 10. Additionally, as described above, due to the structure in which the upper surfaces of the two horizontal (±X axis direction) edges of the flange portion 12 of the insert nut 10 are in contact with the left cover plate 21d and the right cover plate 21e of the flange receiving portion 21 and in non-contact with the first finger 22 and the second finger 23 when the bolt 30 is screwed, the fastening force between the bolt 30 and the insert nut 10 is only applied to the left cover plate 21d and the right cover plate 21e as indicated by the arrow in FIG. 6, and is not applied to the first finger 22 and the second finger 23. Accordingly, when the bolt 30 is screwed, the fastening force exerted by the bolt 30 hardly acts on the pair of fingers 22, 23, so there is no deformation or damage risk of the pair of fingers 22, 23.

The insert nut insertion structure according to an embodiment of the present disclosure may insert the insert nut 10 into the nut fixing groove 20 easily and rapidly without needing to apply an excessive force or use a hammer to insert the insert nut into the groove of the structure as does the conventional press fitting, and has no or little risk of deformation or damage to the nut fixing groove 20 when inserting the insert nut 10 or installing the bolt 30.

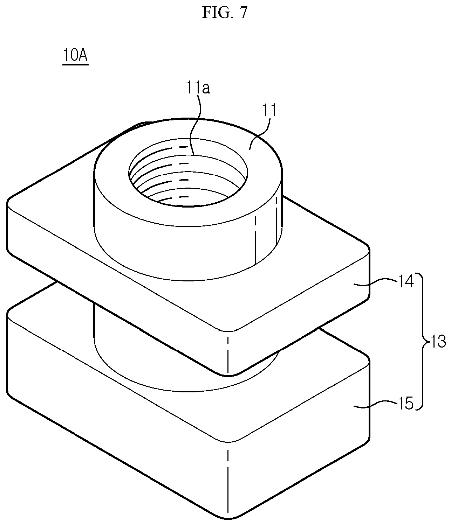

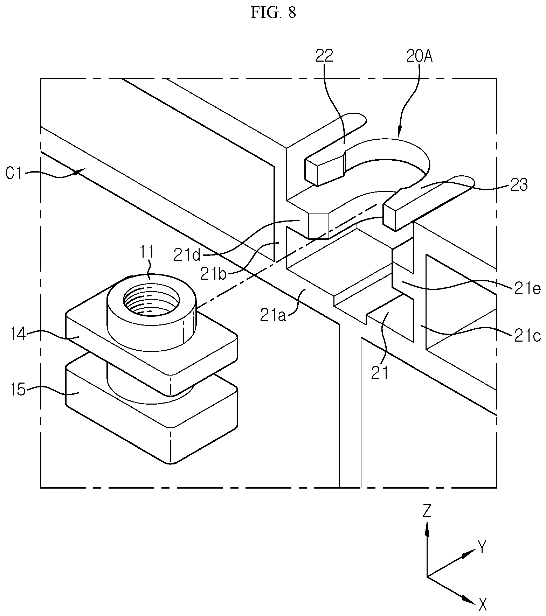

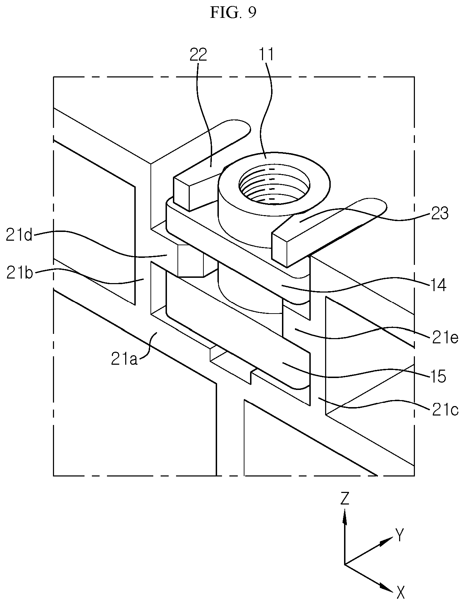

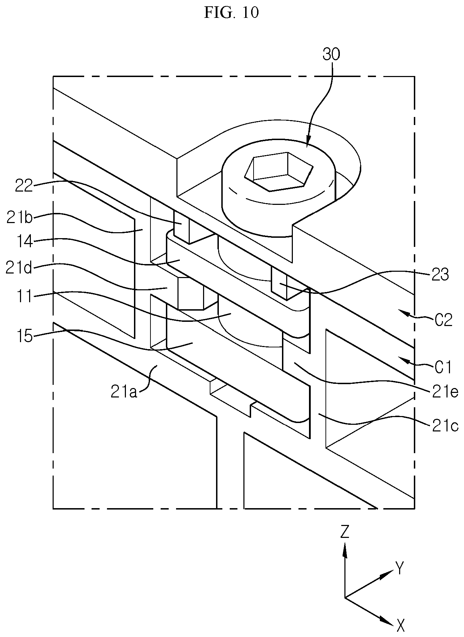

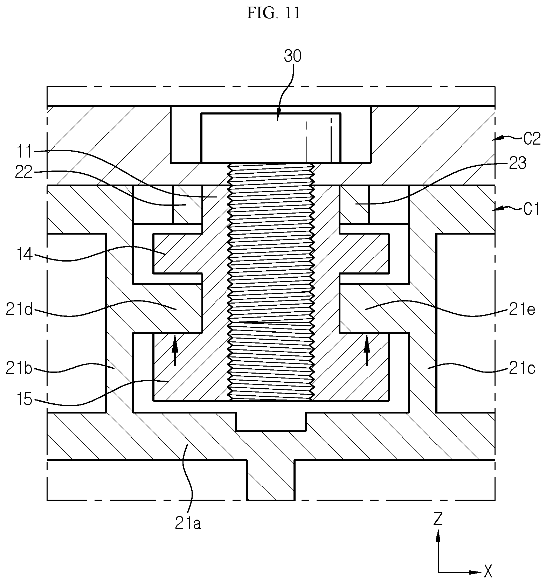

FIG. 7 is a perspective view of an insert nut 10A according to an embodiment of the invention, FIG. 8 is a perspective view showing the insert nut 10A and a nut fixing groove 20A according to another embodiment of the present invention, FIG. 9 is a perspective view showing an assembly structure of the insert nut 10A and the nut fixing groove 20A of FIG. 8, FIG. 10 is a diagram showing an insert nut insertion structure and another structure fastened using a bolt 30 according to another embodiment of the present disclosure, and FIG. 11 is a schematic cross-sectional view of FIG. 10.

Subsequently, the insert nut insertion structure according to the invention will be described with reference to FIGS. 7 to 11.

The same reference numeral as the previous embodiment indicates the same element, and to avoid redundancy, the overlapping description is omitted and the following description is made based on difference(s) between this embodiment and the previous embodiment.

In the same way as the previous embodiment, a bolt fastening portion 11 of the insert nut 10A according to another embodiment of the present invention has a cylindrical shape having threads on the inner circumference and a flange portion 13 has a rectangular plate shape. However, as shown in FIG. 7, when compared with the previous embodiment, the flange portion 13 of the insert nut 10A of another embodiment of the present disclosure includes a lower flange portion 15 and an upper flange portion 14 in double layer along the lengthwise direction (Z axis direction) of the bolt fastening portion 11, the flange portion 13 has a shorter horizontal length, and the bolt fastening portion 11 is extended longer. Additionally, the nut fixing groove 20A according to another embodiment of the present disclosure includes a flange receiving portion 21 and a pair of fingers 22, 23 to allow the insertion of the insert nut 10A.

In another embodiment of the present disclosure, it is possible to easily insert the insert nut 10A into the nut fixing groove 20A and prevent the fastening force of the bolt 30 from being applied to the first finger 22 and the second finger 23 when the bolt 30 is screwed afterwards in the same way as the previous embodiment, and to increase the fastening strength due to the long bolt 30 having a larger length than the previous embodiment screwing into the insert nut 10A and reduce the horizontal width of the nut fixing groove 20A.

Additionally, as shown in FIG. 8, when compared with the flange receiving portion 21 of the previous embodiment, the flange receiving portion 21 according to another embodiment of the present disclosure includes the base plate 21a that is smaller in horizontal width and the two side plates 21b, 21c that are longer in the Z axis direction. Additionally, the cover plates 21d, 21e are extended in the horizontal direction (±X axis direction) at the mid-position of the two side plates 21b, 21C.

Additionally the pair of fingers 22, 23 may be provided with substantially the same structure as the previous embodiment at the location of the same level as the topmost height of the two side plates 21b, 21c. That is, in another embodiment of the present disclosure, the cover plates 21d, 21e are present under the pair of fingers 22, 23.

When the insert nut 10A is inserted into the nut fixing groove 20A, as shown in FIG. 9, the upper part of the bolt fastening portion 11 is interference fitted in between the first finger 22 and the second finger 23, the upper flange portion 14 of the insert nut 10 is positioned in a space between the pair of fingers 22, 23 and the cover plates 21d, 21e, and the lower flange portion 15 of the insert nut 10 is positioned in a space between the cover plates 21d, 21e and the base plate 21a.

Additionally, as shown in FIG. 10, the case structure C1 including the insert nut 10A insertion structure of the invention and another structure C2 may be assembled by the bolting 30.

In this instance, as shown in FIG. 11, due to the structure in which the lower flange portion 15 of the insert nut 10A is in contact with the cover plates 21d, 21e and the upper flange portion 14 is in non-contact with the pair of fingers 22, 23 when the bolt 30 is screwed, the fastening force between the bolt 30 and the insert nut 10A is only applied to the left cover plate 21d and the right cover plate 21e as indicated by the arrow in FIG. 11 and is not applied to the first finger 22 and the second finger 23. Accordingly, the fastening force exerted by the bolt 30 hardly acts on the pair of fingers 22, 23, thereby preventing deformation or damage of the pair of fingers 22, 23.

Meanwhile, a battery pack case according to the present disclosure includes the insert nut insertion structure. Here, the battery pack case may be configured to receive at least one battery cell and various types of devices used to control the charge/discharge of the battery cells, for example, electrical equipment such as a battery management system (BMS) current sensor and a fuse.

The terms indicating directions as used herein such as upper, lower, left, right, front and rear are used for convenience of description only, and it is obvious to those skilled in the art that the term may change depending on the position of the stated element or an observer.

## Claims

1. An insert nut (10A) insertion structure, comprising:
an insert nut (10A) including a bolt fastening portion (11) having threads (11a) on an inner circumference into which a bolt (30) is screwed; and a flange portion (13) provided on an outer circumference of the bolt fastening portion (11) and extended in a circumferential direction of the bolt fastening portion (11); and
a nut fixing groove (20A) into which the insert nut (10A) is inserted in a first direction perpendicular to a direction in which the bolt (30) is screwed,
wherein the nut fixing groove (20A) includes:
a flange receiving portion (20A) having an internal space conforming to a shape of the flange portion (13); and
a pair of fingers (22, 23) provided on the flange portion (13) positioned in the flange receiving portion (20A) and formed in a cantilever shape that surrounds, in part, a periphery of the bolt fastening portion (11), wherein the flange receiving portion (20A) includes:
a base plate (21a) on which the flange portion (13) is seated;
two side plates (21b, 21c) which are vertically extended from the base plate (21a) and contact two sides of the flange portion (13); and
cover plates (21d, 21e) which are horizontally extended from the two side plates (21b, 21c), contact an upper surface of the flange portion (13) and are spaced a predetermined distance apart from the pair of fingers (22, 23), **characterized in that**
the flange portion (13) includes a lower flange portion (15) and an upper flange portion (14) formed in double layer along a lengthwise direction of the bolt fastening portion (11),
wherein the upper flange portion (14) is positioned in a space between the pair of fingers (22, 23) and the cover plates (21d, 21e), and
wherein the lower flange portion (15) is positioned in a space between the cover plates (21d, 21e) and the base plate (21a).

2. The insert nut (10A) insertion structure according to claim 1, wherein the flange portion (13) is provided in contact with the cover plates (21d, 21e) and in non-contact with the pair of fingers (22, 23).

3. The insert nut (10A) insertion structure according to one of the preceding claims, wherein the lower flange portion (15) is provided in contact with the cover plates (21d, 21e).

4. The insert nut (10A) insertion structure according to one of the preceding claims, wherein the upper flange portion (14) is provided in non-contact with the pair of fingers (22, 23).

5. The insert nut (10A) insertion structure according to claim 1, wherein the bolt fastening portion (11) has a cylindrical shape, and
wherein the pair of fingers (22, 23) are extended side by side in a contrary direction to the first direction with their facing inner surfaces being a curved surface conforming to the outer circumference of the bolt fastening portion (11).

6. The insert nut (10A) insertion structure according to claim 1, wherein the pair of fingers (22, 23) are made of an elastic material to allow the fingers (22, 23) to return to an original state when a force exerted to stretch the fingers (22, 23) wide apart is removed.

7. The insert nut (10A) insertion structure according to claim 1, wherein a top periphery of the bolt fastening portion (11) is interference fit in between the pair of fingers (22, 23) in the first direction.

8. A battery pack case comprising the insert nut (10A) insertion structure according to any one of claims 1 to 7.

## Patentansprüche

1. Eine Einsatzmutter(10A)-Einsetzstruktur, umfassend:
eine Einsatzmutter (10A), die einen Bolzenbefestigungsabschnitt (11) mit einem Gewinde (11a) an einem Innenumfang, in dem ein Bolzen (30) eingeschraubt ist, und einen Flanschabschnitt (13) aufweist, der an einem Außenumfang des Bolzenbefestigungsabschnitts (11) vorgesehen ist und sich in einer Umfangsrichtung des Bolzenbefestigungsabschnitts (11) erstreckt; und
eine Mutterbefestigungsnut (20A), in die die Einsatzmutter (10A) in einer ersten Richtung senkrecht zu einer Richtung, in der der Bolzen (30) eingeschraubt wird, eingesetzt ist,
wobei die Mutterbefestigungsnut (20A) umfasst:
einen Flanschaufnahmeabschnitt (20A) mit einem Innenraum, der einer Form des Flanschabschnitts (13) entspricht; und
ein Paar Finger (22, 23), die an dem Flanschabschnitt (13) vorgesehen sind, der in dem Flanschaufnahmeabschnitt (20A) positioniert und als eine Auskragung geformt ist, die teilweise einen Umfang des Bolzenbefestigungsabschnitts (11) umgibt, wobei der Flanschaufnahmeabschnitt (20A) umfasst:
eine Grundplatte (21a), auf der das Flanschabschnitt (13) sitzt;
zwei Seitenplatten (21b, 21c), die sich vertikal von der Grundplatte (21a) erstrecken und zwei Seiten des Flanschabschnitts (13) berühren; und
Abdeckplatten (21d, 21e), die sich horizontal von den beiden Seitenplatten (21b, 21c) aus erstrecken, eine obere Fläche des Flanschabschnitts (13) berühren und in einem vorbestimmten Abstand von dem Paar Finger (22, 23) beabstandet sind,
**dadurch gekennzeichnet, dass**
der Flanschabschnitt (13) einen unteren Flanschabschnitt (15) und einen oberen Flanschabschnitt (14) aufweist, die entlang einer Längsrichtung des Bolzenbefestigungsabschnitts (11) als eine Doppelschicht ausgebildet sind,
wobei der obere Flanschabschnitt (14) in einem Raum zwischen dem Paar Finger (22, 23) und den Abdeckplatten (21d, 21e) angeordnet ist, und
wobei der untere Flanschabschnitt (15) in einem Raum zwischen den Abdeckplatten (21d, 21e) und der Grundplatte (21a) angeordnet ist.

2. Einsatzmutter(10A)-Einsetzstruktur nach Anspruch 1, wobei der Flanschabschnitt (13) in Kontakt mit den Deckplatten (21d, 21e) und in Nicht-Kontakt mit dem Paar Finger (22, 23) vorgesehen ist.

3. Einsatzmutter(10A)-Einsetzstruktur nach einem der vorhergehenden Ansprüche, wobei der untere Flanschabschnitt (15) in Kontakt mit den Deckplatten (21d, 21e) vorgesehen ist.

4. Einsatzmutter(10A)-Einsetzstruktur nach einem der vorhergehenden Ansprüche, wobei der obere Flanschabschnitt (14) in Nicht-Kontakt mit dem Paar Finger (22, 23) vorgesehen ist.

5. Einsatzmutter(10A)-Einsetzstruktur nach Anspruch 1, wobei der Bolzenbefestigungsabschnitt (11) eine zylindrische Form aufweist und
wobei sich das Paar Finger (22, 23) nebeneinander in einer zur ersten Richtung entgegengesetzten Richtung erstreckt, wobei ihre einander zugewandten Innenflächen eine gekrümmte Fläche bilden, die zum Außenumfang des Bolzenbefestigungsabschnitts (11) korrespondiert.

6. Einsatzmutter(10A)-Einsetzstruktur nach Anspruch 1, wobei das Paar Finger (22, 23) aus einem elastischen Material gebildet ist, um den Fingern (22, 23) zu ermöglichen, in einen ursprünglichen Zustand zurückzukehren, wenn eine Kraft, die ausgeübt wird, um die Finger (22, 23) weit auseinander zu ziehen, entfernt wird.

7. Einsatzmutter(10A)-Einsetzstruktur nach Anspruch 1, wobei ein oberer Umfang des Bolzenbefestigungsabschnitts (11) in der ersten Richtung zwischen dem Paar Finger (22, 23) in Presspassung ist.

8. Batteriegehäuse mit der Einsatzmutter(10A)-Einsetzstruktur nach einem der Ansprüche 1 bis 7.

## Revendications

1. Structure d'insertion d'écrou d'insert (10A), comprenant :
un écrou d'insert (10A) incluant une portion d'assujettissement de boulon (11) ayant des filetages (11a) sur une circonférence interne dans laquelle un boulon (30) est vissé ; et une portion de bride (13) prévue sur une circonférence externe de la portion d'assujettissement de boulon (11) et qui s'étend dans une direction circonférentielle de la portion d'assujettissement de boulon (11) ; et
une rainure de fixation d'écrou (20A) dans laquelle l'écrou d'insert (10A) est inséré dans une première direction perpendiculaire à une direction dans laquelle le boulon (30) est vissé,
où la rainure de fixation d'écrou (20A) inclut :
une portion de réception de bride (20A) ayant un espace interne se conformant à une forme de la portion de bride (13) ; et
une paire de doigts (22, 23) prévus sur la portion de bride (13) positionnée dans la portion de réception de bride (20A) et formée en une forme de porte-à-faux qui entoure, en partie, une périphérie de la portion d'assujettissement de boulon (11), où la portion de réception de bride (20A) inclut :
une plaque de base (21a) sur laquelle la portion de bride (13) a son assise ;
deux plaques latérales (21b, 21c) qui s'étendent verticalement à partir de la plaque de base (21a) et entrent en contact avec deux côtés de la portion de bride (13) ; et
des plaques de couverture (21d, 21e) qui s'étendent horizontalement à partir des deux plaques latérales (21b, 21c), entrent en contact avec une surface supérieure de la portion de bride (13) et sont écartées suivant une distance prédéterminée par rapport à la paire de doigts (22, 23),
**caractérisée en ce que**
la portion de bride (13) inclut une portion de bride inférieure (15) et une portion de bride supérieure (14) formées en une double couche le long d'une direction dans le sens de la longueur de la portion d'assujettissement de boulon (11),
où la portion de bride supérieure (14) est positionnée dans un espace entre la paire de doigts (22, 23) et les plaques de couverture (21d, 21e), et
où la portion de bride inférieure (15) est positionnée dans un espace entre les plaques de couverture (21d, 21e) et la plaque de base (21a).

2. Structure d'insertion d'écrou d'insert (10A) selon la revendication 1, où la portion de bride (13) est prévue pour être en contact avec les plaques de couverture (21d, 21e) et ne pas être en contact avec la paire de doigts (22, 23).

3. Structure d'insertion d'écrou d'insert (10A) selon l'une des revendications précédentes, où la portion de bride inférieure (15) est prévue pour être en contact avec les plaques de couverture (21d, 21e).

4. Structure d'insertion d'écrou d'insert (10A) selon l'une des revendications précédentes, où la portion de bride supérieure (14) est prévue pour ne pas être en contact avec la paire de doigts (22, 23).

5. Structure d'insertion d'écrou d'insert (10A) selon la revendication 1, où la portion d'assujettissement de boulon (11) a une forme cylindrique, et
où la paire de doigts (22, 23) s'étendent côte à côte suivant une direction contraire à la première direction alors que leurs surfaces internes se faisant face ont une surface incurvée se conformant à la circonférence externe de la portion d'assujettissement de boulon (11).

6. Structure d'insertion d'écrou d'insert (10A) selon la revendication 1, où la paire de doigts (22, 23) sont réalisés en une matière élastique pour permettre aux doigts (22, 23) de revenir à un état initial lorsqu'une force s'exerçant pour écarter de manière importante les doigts (22, 23), en les étirant, est enlevée.

7. Structure d'insertion d'écrou d'insert (10A) selon la revendication 1, où une périphérie supérieure de la portion d'assujettissement de boulon (11) est en ajustement serré entre la paire de doigts (22, 23) dans la première direction.

8. Boîtier de bloc-batterie comprenant la structure d'insertion d'écrou d'insert (10A) selon n'importe laquelle des revendications 1 à 7.
